(19) Europäisches Patentamt
European Patent Office
Office européen des brevets

(11) **EP 4 764 673 A1**

(12) **EUROPEAN PATENT APPLICATION**
published in accordance with Art. 153(4) EPC

(43) Date of publication:
**24.06.2026 Bulletin 2026/26**

(21) Application number: **24854162.5**

(22) Date of filing: **08.08.2024**

(51) International Patent Classification (IPC):
**G02C 7/06** (2006.01)

(52) Cooperative Patent Classification (CPC):
**G02C 7/06**

(86) International application number:
**PCT/JP2024/028365**

(87) International publication number:
**WO 2025/037572 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023 JP 2023132492**

(71) Applicant: **HOYA LENS THAILAND LTD.
Pathumthani 12130 (TH)**

(72) Inventor: **MATSUOKA, Shohei
Tokyo 160-8347 (JP)**

(74) Representative: **Betten & Resch
Patent- und Rechtsanwälte PartGmbB
Maximiliansplatz 14
80333 München (DE)**

(54) **SPECTACLE LENS AND SPECTACLES**

(57) To provide a spectacle lens and a technology related thereto, wherein respective first annular regions and respective second annular regions are alternately arranged adjacent to each other from an eye point toward the outside. An inner side of the second annular region closest to the eye point is a center-side clear region which is a first refractive region, and the eye point is arranged in the center-side clear region. The second annular regions are densely arranged on a nose side from the eye point to the outside, and the second annular regions are sparsely arranged on an ear side from the eye point to the outside.

[Fig. 2]

## Description

Technical Field

The present invention relates to a spectacle lens and spectacles.

Background Art

Claim 1 of PTL 1 describes the following contents.

Spectacle lens, comprising:

a first refractive region that has a first power based on a prescription for correcting a refraction abnormality of an eye; and

a second refractive region that has a power different from the first power and has a function of focusing on a position other than a retina of the eye so as to inhibit progression of a refractive abnormality in the eye,

wherein the second refractive region is formed near a central portion of the lens, as many island-like regions which are independent of each other, and

the first refractive region is formed in a region other than a region in which the second refractive region is formed. A myopia progression inhibition lens is described as this spectacle lens.

PTL 2 discloses a myopia progression inhibition lens from the viewpoint of modulation transfer function (MTF). Said literature also discloses that a myopia inhibition effect is provided by inhibiting contrast of a specific spatial frequency through a periodical uneven structure.

Paragraph [0102] of PTL 3 describes that a hyperopia reducing function is achieved by replacing a convex portion of a substrate of the spectacle lens with a concave portion.

A spectacle lens having a configuration different from those described in PTL 1 and 3 is also known. Examples of such spectacle lens include a Fresnel lens. PTL 4 relating to the Fresnel lens describes the following contents:

Claim 1 of PTL 4 describes a method for treating progression of refraction abnormality in a human eye, the method comprising: (a) the step of providing a Fresnel lens having a first optical zone with a first power and a second optical zone with at least one second power; and (b) the step of correcting a refraction abnormality using the first power and the step of generating at least one out-of-focus using the second power.

Further, paragraph [0002] of PTL 4 describes that myopia and hyperopia are common refraction disorders of human eyes.

In addition, paragraph [0012] of PTL 4 describes that the method for treating progression of refraction disorder in a human eye includes the step of providing a Fresnel lens having first and second optical zones.

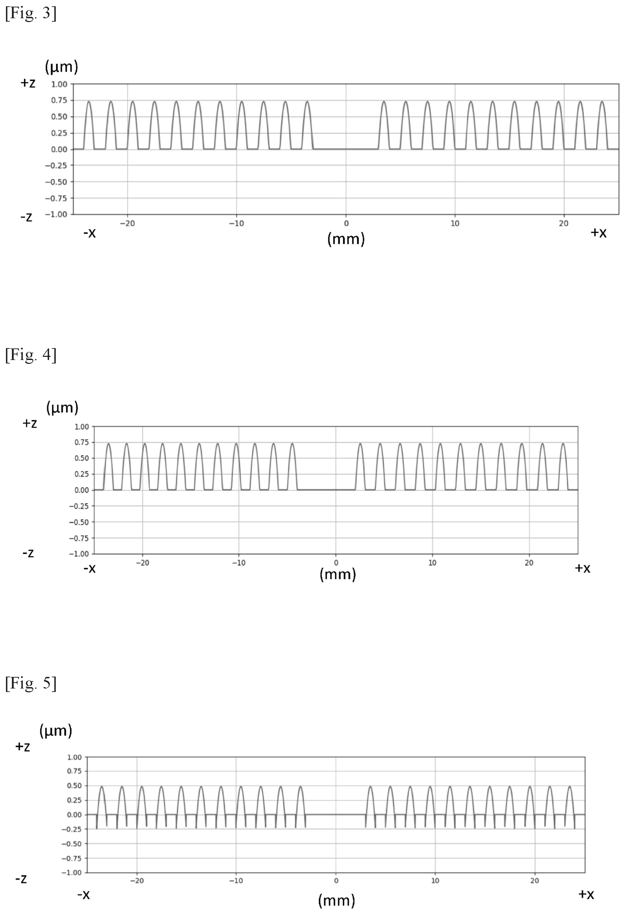

Figs. 4a and 4b of PTL 4 describe a Fresnel type concentric double focal point or multifocal lens having an alternating central optical zone 41 which is the first optical zone having a prescription power and an alternating central optical zone 42 which is the second refractive zone for generating an out-of-focus.

PTL 5 describes a configuration in which a second power region has a cylindrical shape instead of the Fresnel lens.

Citation List

Patent Literature

[PTL 1] US 2017/0131567 A
[PTL 2] WO 2021/249846
[PTL 3] WO 2020/045567
[PTL 4] JP 2008-514318 A
[PTL 5] CN 111103701 A

Summary of Invention

Technical Problem

In the Fresnel lenses described in Figs. 4a and 4b of PTL 4, the alternating central optical zones 41 and 42 are rotationally symmetrical with respect to a common central point. In accordance with the description of the present specification, the alternating central optical zones 41 and 42 are hereinafter referred to as a first annular region constituted by the first refractive region and a second annular region constituted by the second refractive region, respectively.

This rotationally symmetrical shape is also annular, that is, rotationally symmetrical when viewed relative to the eyeball-side surface where the second annular region is formed (as viewed in plan view), and is also rotationally symmetrical in an arbitrary cross section passing through the central point as viewed in plan view.

Unlike the spectacle lenses of PTL 1 and 3 in which the second refractive region is formed as many independent island-like regions in the vicinity of the center of the lens, the Fresnel lens described in PTL 4 has a rotationally symmetrical shape and is easily machined by a lathe. Even when the cutting process for directly forming the second annular region on a spectacle lens is performed, or when the second annular region is formed on a mold in manufacturing a spectacle lens by injection molding using a mold, lathe processing is easy. The ease of lathe processing means that the processing can be carried out at a low cost and with a high precision.

Meanwhile, the following demand has newly been found common to the spectacle lenses described in PTL 1 and 3 and the Fresnel lenses described in PTL 4. An example in which the spectacle lens is a myopia progression inhibition lens and the second refractive region is a convex region will be described below.

When a parallel light flux is incident on the pupil through the spectacle lens from a sufficiently far distance, a convex region of the spectacle lens exerts refractive power according to the shape thereof. On the other hand, when divergent light is incident on the pupil through the spectacle lens from a position near the wearer of the spectacle lens, the convex region of the spectacle lens exerts only low refractive power.

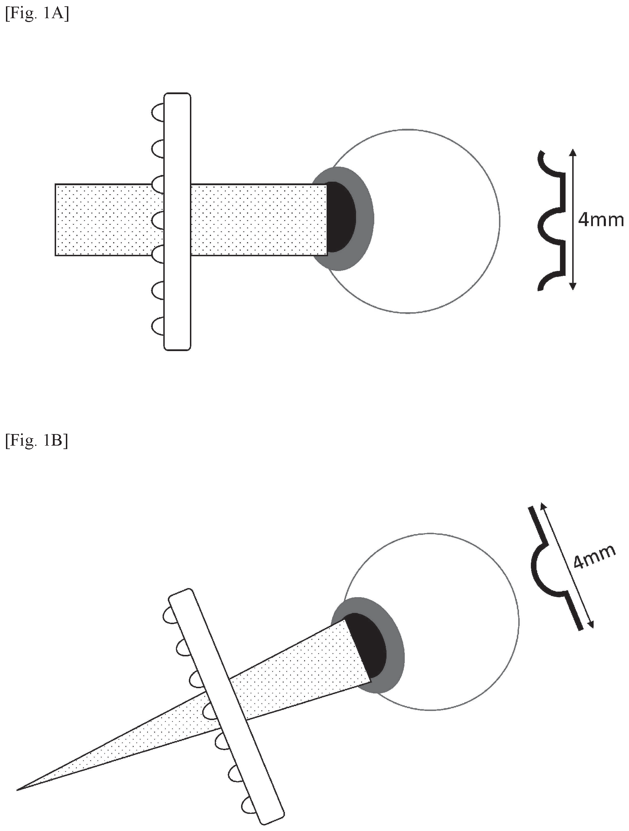

Fig. 1A is an explanatory view showing the state of a spherical wave ($\varphi4$, i.e., within a pupil diameter of 4.0 mm, located behind the eye) when a parallel light flux from a sufficiently far distance is incident on the pupil through a myopia progression inhibition lens.

Fig. 1B is an explanatory view showing the state of a spherical wave ($\varphi4$, i.e., within a pupil diameter of 4.0 mm, located behind the eye) when divergent light is incident on the pupil from a position near the wearer of a myopia progression inhibition lens through the myopia progression inhibition lens.

In Fig. 1A, a spherical wave corresponding to each micro convex portion (convex region in the present application) is generated. On the other hand, in Fig. 1B, divergent light that has passed through each convex region is incident on the pupil from the oblique lower side to the oblique upper side. As a result, compared to each spherical wave in Fig. 1A, one spherical wave elongates in the vertical direction of the diagram. This elongation ratio is approximately $(1 + L/T)$, where the corneal vertex distance is represented by L [mm] and the distance from the lens to the object during near vision is represented by T [mm]. Naturally, the retina receives the spherical wave corresponding to each convex region. However, during near vision using the myopia progression inhibition lens, this reception does not occur, resulting in only low refractive power. Specifically, the apparent power decreases in reverse proportion to the square of the elongation ratio, that is, the apparent power becomes $1/(1 + L/T)^2$ of the original apparent power. For example, if L = 12 mm and T = 300 mm, the elongation ratio is 1.04 and the apparent power is 1/1.08. This phenomenon may be referred to as "apparent power becomes smaller."

From the viewpoint of MTF, which spatial frequency has contrast inhibited is determined by the period of the structure. When the apparent period elongates for a long time, the spatial frequency in which the contrast is inhibited increases by the elongation ratio. For example, in the configuration in which the first and second refractive regions are provided at intervals of 2 mm in the meridional direction and at intervals of 1 mm in the sagittal direction, the contrast of spatial frequency 33CPD is inhibited in the meridional direction with respect to light from Infinity of wavelength 530 nm, and the contrast of spatial frequency 66CPD is inhibited in the sagittal direction, but spatial frequencies inhibited by the aforementioned elongation shift to 34.32CPD and 68.64CPD, respectively.

This phenomenon occurs because the height of incidence becomes relatively low on the spectacles located in front of the pupil when the refractive power is determined by (height of incidence on the lens × power) and divergent light is incident.

Taking this into consideration, when the wearer focuses the myopia progress restricting lens on the near side, the defocus power of each convex region located at the position where the line of sight passes through is set large in advance (i.e., the refractive power is set large in advance). However, the second annular region of the Fresnel lens described in PTL 4 has a rotationally symmetrical shape, and it is difficult to machine only the position through which the line of sight passes when the wearer focuses on the near side. This is because the processing of only said position leads to a collapse of the rotationally symmetrical shape of the second annular region, which in turn leads to a loss of "easiness of the lathe processing" which is the merit of the rotationally symmetrical shape, and as a result, processing at low cost and with high precision becomes difficult.

The above problem is applicable not only to the case where the spectacle lens is a myopia progression inhibition lens and the second refractive region is a convex region, but also to the case where the spectacle lens is a hyperopia reducing lens and the second refractive region is a concave region.

An object of an embodiment according to the present invention is to inhibit a decrease in the refractive power of the second annular region in near vision, while making the second annular region a rotationally symmetrical shape.

Solution to Problem

The inventors of the present application conducted intense research to solve the foregoing problems. As a result, it was found that the above problems can be solved by shifting the position of the rotation center between the second annular region close to the rotation center and the second annular region far from the rotation center, while the second annular region remains rotationally symmetrical. Specifically, it has been found that, on the nose side of the spectacle lens through which the line of sight passes in near vision, the second annular regions are arranged densely so that the second annular regions can sufficiently exhibit the refractive power.

Each of the following aspects has been created based on the foregoing findings. An aspect which depends on an independent aspect out of the following aspects can be combined with other dependent aspects and/or other independent aspects.

A first aspect of the present invention is:

a spectacle lens achieving a myopia progression inhibition effect or a hyperopia reducing effect, the spectacle lens comprising, on at least either one of an object-side surface and an eyeball-side surface:

a first refractive region that has a first power for realizing a prescription power of a wearer; and

a second refractive region that has a second power different from the first power,

and the spectacle lens further comprising: a second annular region group that includes a plurality of second annular regions configured by the second refractive region when the spectacle lens is viewed in plan view, the second annular regions being rotationally symmetrical with respect to a center of a ring; and

a first annular region group that includes a plurality of first annular regions sandwiched between the second annular regions and configured by the first refractive region,

wherein the first annular regions and the second annular regions are alternately arranged adjacent to each other from an eye point toward the outside,

an inner side of the second annular region closest to the eye point is a center-side clear region which is the first refractive region, and the eye point is arranged in the center-side clear region,

the second annular regions are densely arranged on a nose side from the eye point to the outside, and

the second annular regions are sparsely arranged on an ear side from the eye point to the outside.

A second aspect of the present invention is:

the spectacle lens according to the first aspect, wherein, in the second annular region group, a center position of a second annular region close to the eye point is displaced toward the nose side with respect to a center position of a second annular region far from the eye point.

A third aspect of the present invention is:

the spectacle lens according to the first or second aspect, wherein a center of the second annular region closest to the eye point is located on the nose side of the eye point.

A fourth aspect of the present invention is:

the spectacle lens according to the first or second aspect, wherein a width on the ear side is greater than a width on the nose side in a first annular region farthest from the eye point, and

a value of {(width on the ear side) - (width on the nose side)} increases monotonously outward from the eye point in each of the first annular regions.

A fifth aspect of the present invention is:

the spectacle lens according to the first or second aspect, wherein a center of the second annular region farthest from the eye point is equal to the position of the eye point.

A sixth aspect of the present invention is:

the spectacle lens according to the first or second aspect, wherein the widths of the respective second annular regions are equal in all directions in plan view, and the widths of all the second annular regions are equal.

A seventh aspect of the present invention is:

the spectacle lens according to the first or second aspect, wherein the width of the ring of each of the first annular regions is greater than the width of the ring of each adjacent second annular region.

An eighth aspect of the present invention is:

the spectacle lens according to the first or second aspect, wherein the second annular region farthest from the eye point is arranged outside the first annular region farthest from the eye point, and

an outer-side clear region which is a first refractive region is arranged on the outside of the second annular region farthest from the eye point.

A ninth aspect of the present invention is:

the spectacle lens according to the first or second aspect, the spectacle lens achieving a myopia progression inhibition effect,
wherein the second refractive region is a projecting portion viewed from the first refractive region.

A tenth aspect of the present invention is:

the spectacle lens according to the first or second aspect, the spectacle lens achieving a myopia progression inhibition effect,
wherein, in the second annular region group, the center position of the second annular region close to the eye point is displaced toward the nose side with respect to the center position of the second annular region far from the eye point,
a center of the second annular region closest to the eye point is located on the nose side of the eye point,
a width on the ear side is greater than a width on the nose side in a first annular region farthest from the eye point, and
a value of {(width on the ear side) - (width on the nose side)} increases monotonously outward from the eye point in each of the first annular regions,
a center of the second annular region farthest from the eye point is equal to the position of the eye point,
the widths of the respective second annular regions are equal in all directions in plan view, and the widths of all the second annular regions are equal,
the width of the ring of each of the first annular regions is greater than the width of the ring of each adjacent second annular region,
the second annular region farthest from the eye point is arranged outside the first annular region farthest from the eye point,
an outer-side clear region which is a first refractive region is arranged on the outside of the second annular region farthest from the eye point, and
the second refractive region is a projecting portion viewed from the first refractive region.

An eleventh aspect of the present invention is:
spectacles, comprising: the spectacle lens according to the first or second aspect; and a spectacle frame.
The following aspects may be combined with each other as appropriate.
Each of the second annular regions as a defocus region is configured as follows, for example. The second annular region is a convex region, and the radius of curvature of the convex region is 50 to 250 mm, preferably approximately 86 mm in a spherical shape in a cross-sectional view.
Needless to say, each of the second annular regions which is a defocus region may be a region in which one cross-section of the lens is sawtooth-shaped or uneven (phase diffraction structure). This unevenness may have a periodic structure or may have a non-periodic structure such as surface roughness formed by embossing.
It is preferred that the protruding height (protruding amount from the first annular region) of each second annular region be approximately 0.1 to 10 $\mu$m, or approximately 0.4 to 2.0 $\mu$m.
In plan view, the ratio of the second annular region group to the area of the surface on which the second annular region group is formed may be 20 to 60%.
Although the specific numerical value of the defocus power in each second annular region is not limited, the minimum value of the defocus power provided by the defocus regions on the spectacle lens, for example, is preferably in the range of 0.50 to 4.50 D, and the maximum value thereof is preferably in the range of 3.00 to 10.00 D. The difference between the maximum value and the minimum value is preferably in the range of 1.00 to 5.00 D.
In the case of a spectacle lens that achieves a hyperopia reducing effect, "convex" in the description regarding the second refractive region may be replaced with "concave." In the case of a spectacle lens that achieves a hyperopia reducing effect, the values described in the present section may be used with their positive and negative signs reversed appropriately.
One benchmark for the lower limit of the size of the center-side clear region may be a size which can contain a circle with a diameter of 5.00 mm around an eye point EP. One benchmark for the upper limit of the size of the center-side clear region may suffice to fit within a circle with a diameter of 10.00 mm around the eye point EP. The area of the center-side clear region may be 80 mm$^2$ or less.
The shape of the center-side clear region may be rotationally symmetrical in plan view, such as a circular shape.
A requirement that the width of each first annular region on the nose side be monotonously reduced toward the outside may be satisfied. For example, when comparing the width of any first annular region on the nose side with the width of the first annular region on the nose side that is immediately outside said any first annular region, if both widths are equal or the farther the first annular region is, the width of the first annular region on the nose side on the outside may be reduced.

An example of the specific range of values of each configuration is as follows.

Width of the ring of the first annular region: 0.5 to 1.5 mm
Width of the ring of the second annular region: 0.5 to 1.5 mm
Ratio of the width of the ring of the second annular region to the width of the ring of the first annular region: 1:2 to 2:1
The following conditional expression may be satisfied.

$$((L-D\_k)/(L-D\_1))^{3/2} < W\_k/W\_1 < ((L-D\_k)/(L-D\_1))^{1/2}$$

A requirement that the width of each first annular region on the ear side be monotonously increased toward the outside may be satisfied. For example, when comparing the width of any first annular region on the ear side with the width of the first annular region on the ear side that is immediately outside said any first annular region, if both widths are equal or the farther the first annular region is, the width of the first annular region on the outside on the ear side may be increased.

As an example, the width on the ear side may be greater than the width on the nose side in a first annular region in the middle between the first annular region farthest from the eye point and the first annular region closest thereto (one when the number of the first annular regions is an odd number and two when the number is an even number).

Advantageous Effects of Invention

The embodiment of the present invention can inhibit a decrease in the refractive power of the second annular region in near vision while making the second annular region a rotationally symmetrical shape.

Brief Description of Drawings

[Fig. 1A] Fig. 1A is an explanatory view showing a state of a spherical wave where a parallel light flux from a sufficiently far distance passes through a myopia progression inhibition lens and is incident on a pupil.
[Fig. 1B] Fig. 1B is an explanatory view showing a state of a spherical wave where divergent light from a position near the wearer of the myopia progression inhibition lens passes through the myopia progression inhibition lens and is incident on the pupil.

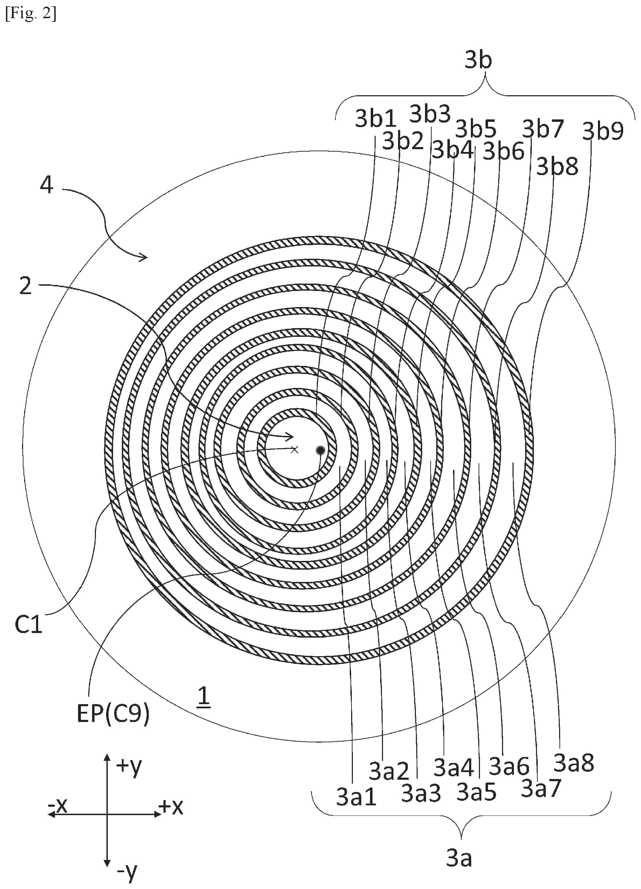

[Fig. 2] Fig. 2 is a front elevation view showing a spectacle lens according to an aspect of the present invention.
[Fig. 3] Fig. 3 is a schematic view of a cross-sectional shape of a spectacle lens according to Comparative Example 1 when a plane including an x-axis is taken as a cross-section, and more specifically a schematic view obtained by subtracting a spherical component of a base curve from the cross-sectional shape of the lens, the schematic view being a graph in which the vertical axis represents a z-coordinate value (unit: μm), and the horizontal axis represents an x-coordinate value (unit: mm).
[Fig. 4] Fig. 4 is a schematic view of a cross-sectional shape of a spectacle lens according to Example 1 when a plane including an x-axis is taken as a cross-section, and more specifically a schematic view obtained by subtracting a spherical component of a base curve from the cross-sectional shape of the lens, the schematic view being a graph in which the vertical axis represents a z-coordinate value (unit: μm), and the horizontal axis represents an x-coordinate value (unit: mm).
[Fig. 5] Fig. 5 is a schematic view of a cross-sectional shape of a spectacle lens according to Example 2 when a plane including an x-axis is taken as a cross-section, and more specifically a schematic view obtained by subtracting a spherical component of a base curve from the cross-sectional shape of the lens, the schematic view being a graph in which the vertical axis represents a z-coordinate value (unit: μm), and the horizontal axis represents an x-coordinate value (unit: mm).

Description of Embodiments

An aspect of the present invention will be described below. The following description based on the drawings is illustrative, and the present invention is not limited to the illustrated aspects. In the present specification, the term "to" refers to values that are predetermined values or more and predetermined values or less.

<Definition>

The spectacle lens described in the present specification has an object-side surface and an eyeball-side surface.

The "object-side surface" refers to a surface that is located on the object side when spectacles that include the spectacle lens are worn by a wearer.

The "eyeball-side surface" refers to a surface on the opposite side, i.e., the surface that is located on the eyeball side when the spectacles that include the spectacle lens are worn by the wearer.

Generally the object-side surface is a convex surface and the eyeball-side surface is a concave surface, that is, the spectacle lens is meniscus lenses.

In the present specification, in the direction facing the object-side surface of the spectacle lens (hereinafter, when viewed in plan view), a left-right direction is referred to as an x-direction, an up-down direction as a y-direction, and a thickness direction of the spectacle lens, which is perpendicular to the x-direction and y-directions, as a z-direction. The z-direction is also the optical axis direction of the spectacle lens. The origin is the eye point. The present specification illustrates a case where the eye point and the geometric center roughly match.

The right direction (3 o'clock direction) is referred to as a +x-direction, the left direction (9 o'clock direction) as a -x-direction, the top direction (0 o'clock direction) as a +y-direction, the bottom direction (6 o'clock direction) as a -y-direction, the direction toward the object-side as a +z-direction, and the opposite direction (toward the back) as a -z-direction.

The x-direction is also called an x-axis, the y-direction is also called a y-axis, and the z-direction is also called a z-axis. The content of this paragraph can be rephrased as follows.

"When wearing the spectacle lens, the axis passing through the lens center from the object side toward the eyeball side is the z-axis, the axis extending from bottom to top perpendicularly to the z-axis is the y-axis, and the axis extending from left to right perpendicularly to the z-axis is the x-axis."

When a third party looks at the spectacles from the front, in the lens for the left eye, the -x-direction corresponds to the nose side and the +x-direction the ear side when viewed from the third party. Fig. 1, which will be described later, relates to the lens for the left eye.

The term "nose side" as used herein refers to a predetermined direction (e.g., the -x-direction) extending from the eye point (origin) toward a region where x < 0 is satisfied in the lens for the left eye. This rule takes into consideration that when the line of sight is lowered, it moves toward the nose side (i.e., the line of sight moves inward) at the time of near vision.

The term "ear side" as used herein refers to a predetermined direction (e.g., the +x-direction) extending from the eye point (origin) toward a region where x > 0 is satisfied in the lens for the left eye.

The "predetermined direction extending from the eye point (origin) toward a region where x < 0 is satisfied in the lens for the left eye" may be a predetermined direction from the eye point (origin) toward a region where $x < 0$ and $y \leq 0$ (preferably $y \geq 2x$) is satisfied considering the fact that the line of sight is lowered at the time of near vision.

In the present specification, the directions of the nose side and the ear side may be opposite to each other. On the other hand, for example, the nose side may be oriented along y = x while the ear side may be oriented along y = 0.

In the lens for the right eye, the nose side and the ear side can be defined by reversing the relationship of size described in this paragraph.

In the present specification, unless otherwise mentioned, a situation in which a third person looks at the spectacles from the front will be discussed. When the spectacle lens is placed on a table, the object-side surface or the eyeball-side surface is positioned on the top side in the top-bottom direction. Therefore, when discussing the configuration of each surface of the spectacle lens, it is assumed that the spectacle lens is in plan view. In the case where the second annular region is formed on the eyeball-side surface, the direction of the second annular region opposing the eyeball-side surface is assumed to be in plan view.

The "eye point (EP)" is a position through which the line of sight passes when the wearer faces straight ahead with the spectacle lens on. In one aspect of the present invention, the eye point is aligned with a prism reference point. In one aspect of the present invention, the eye point is arranged in the middle between two hidden marks.

In the present specification, the side of the eye point of the spectacle lens is referred to as the inner side, and the outermost edge side of the spectacle lens is referred to as the outer side. In the present specification, such expressions as "closest to the eye point" are used, but a direction closer to the eye point (lens center) is called the inner side, and a direction opposite thereof that is away from the eye point (a direction from the eye point toward the outer edge of the lens) is called the outer side.

The present specification shows an example in which the eye point is aligned with the geometric center and the centering center. The eye point may be called an optical center or a lens center.

Incidentally, prescription data on wearer's information is indicated on the lens bag of the spectacle lens. In other words, if there is a lens bag, identification of the spectacle lens as an object is possible on the basis of prescription data on wearer's information including information on the left eye or right eye. Further, the spectacle lens is usually paired with a lens bag. Accordingly, the technical idea of the present invention is also reflected in spectacle lenses accompanied by lens bags, and the same applies to a set consisting of a lens bag and a spectacle lens.

The position of the eye point can be identified by referring to a Remark chart or a Centration chart issued by the lens manufacturer.

In the present specification, the meaning of "equal" includes the case where the value of B being compared is equal to the reference value of A (e.g., a distance or coordinate value), and the case where $0.8 \leq B/A \leq 1.2$ (preferably $0.9 \leq B/A \leq 1.1$, and more preferably $0.95 \leq B/A \leq 1.05$) is satisfied.

The "annular region" as used herein refers to an annular region having a width. In the present specification, the center of the circle passing through the center of the width of the ring is referred to as "center of the ring." However, as described below, since the second annular region has a rotationally symmetrical shape, the center of a circle formed by the inner side of a circular ring and the center of a circle formed by the outer side of the circular ring have the same center position.

In the present specification, the "width of the annular region" refers to the distance between the inner boundary and the outer boundary of the annular region on a straight line passing through the center of the rotationally symmetrical shape in plan view.

<Spectacle lens according to aspect of present invention>

Fig. 2 is a front elevation view showing a spectacle lens according to an aspect of the present invention.

Note that, although Fig. 2 shows an example in which the number of the second annular regions is nine, in each example described below, eleven second annular regions are provided.

Reference numeral 1 denotes the spectacle lens, reference numeral 2 denotes a center-side clear region (described later), and reference numeral 4 denotes an outer-side clear region (described later). Symbol EP indicates an eye point. Reference character 3a denotes a first annular region group (described later), and reference character 3b denotes a second annular region group (described later). Numerical values 1, 2, 3, ... following the reference characters 3a and 3b represent an order closer to the eye point EP. Reference character C denotes the center of the second annular region, and numerical values 1, 2, 3, ... after the reference character C indicate the centers of second annular regions 3b1, 3b2, 3b3, ..., respectively. Fig. 2 illustrates a case where the center of a second annular region 3b9 farthest from the eye point EP is equal to the eye point EP. Hereinafter, the reference numerals are omitted.

The spectacle lens according to one aspect of the present invention is

a spectacle lens achieving a myopia progression inhibition effect or a hyperopia reducing effect, the spectacle lens comprising, on at least either one of an object-side surface and an eyeball-side surface:

a first refractive region that has a first power for realizing a prescription power of a wearer; and
a second refractive region that has a second power different from the first power,
and the spectacle lens further comprising: a second annular region group that includes a plurality of second annular regions configured by the second refractive region when the spectacle lens is viewed in plan view, the second annular regions being rotationally symmetrical with respect to a center of a ring; and
a first annular region group that includes a plurality of first annular regions sandwiched between the second annular regions and configured by the first refractive region,
wherein the first annular regions and the second annular regions are alternately arranged adjacent to each other from an eye point toward the outside,
an inner side of the second annular region closest to the eye point is a center-side clear region which is the first refractive region, and the eye point is arranged in the center-side clear region,
the second annular regions are densely arranged on a nose side from the eye point to the outside, and
the second annular regions are sparsely arranged on an ear side from the eye point to the outside.

For convenience of explanation, a spectacle lens achieving a myopia progression inhibition effect will be illustrated as an aspect of the present invention, and the case where the second refractive region is a convex region will be illustrated. That is, the second refractive region is a projecting portion when viewed from the first refractive region. On the other hand, in the case of a spectacle lens achieving a hyperopia reducing effect, the term "convex" described below with respect to the second refractive region should be replaced with "concave." In the case of a spectacle lens that achieves a hyperopia reducing effect, the values described in the present section may be used with their positive and negative signs reversed appropriately.

The first refractive region is a portion having a smooth surface shape that is capable of realizing the prescription power of the wearer from a geometric optical standpoint, and is, for example, a portion that is transparent in the visible light wavelength range. The first refractive region is a portion that corresponds to the first refractive region described in PTL 1. The first refractive region according to an aspect of the present invention exhibits the functionality of a so-called unifocal lens.

In an aspect of the present invention, the inside of the second annular region closest to the eye point is a center-side clear region, which is a first refractive region, and the eye point is arranged within said center-side clear region. Each of the center-side clear region and the first annular region group may be simply referred to as a "clear region." Also, the outer-side clear region described below may be generically referred to as a clear region. The clear region is a region that causes a light flux incident from the object-side surface to be emitted from the eyeball-side surface, enter the wearer's pupil, and be focused on the retina.

The first refractive region according to an aspect of the present invention can realize prescription power (spherical power, astigmatism power, astigmatism axis, or the like). This spherical power may be a power to be corrected for frontal vision (e.g., a distance power, which will be illustrated hereinafter) (where the distance to the object is from infinity to approximately 1 m), or may be a power to be corrected for intermediate vision (1 m to 40 cm) or near vision (40 cm to 10 cm).

In the present specification, for convenience of explanation, the central or upper side of the spectacle lens is referred to as a distance portion, while the lower side of the spectacle lens is referred to as a near portion. The lower side is a portion through which a line of sight passes when a shorter distance than the distance to the object defined in the first refractive region is viewed. The distance portion and the near portion described in the present specification are concepts different from those used in a progressive power lens.

The second refractive region is a portion that corresponds to the alternating central optical zone 42 described in PTL 4, and is an annular region having the second power different from the first power.

The second refractive region according to an aspect of the present invention is composed of a plurality of annular convex regions (second annular regions) that cause a light flux incident from the object-side surface to be emitted from the eyeball-side surface, while providing positive defocus power to focus a light flux incident on the wearer's pupil at a position in front of a light flux that has passed through the base region. The second refractive region may also be referred to as a defocus region, a region having power different from the prescription power, that is, a non-focused region on the retina, and may also be a region that does not focus the light flux incident on the wearer's pupil on the retina. In an aspect of the present invention, the region other than the second refractive region is the first refractive region.

The defocus region refers to a region in which, from a geometric optical standpoint, at least a portion thereof does not focus rays at a focal position obtained by the clear region.

Each of the second annular regions as a defocus region is configured as follows, for example. The second annular region is a convex region, and the radius of curvature of the convex region is 50 to 250 mm, preferably approximately 86 mm in a spherical shape in a cross-sectional view. Here, the spherical shape means that the cross-sectional shape thereof becomes a part of the cross section of the sphere.

The three-dimensional shape of the convex region is not limited. As in an aspect of the present invention, the convex region may be configured by a curved surface (spherical, aspherical, or a combination thereof), or may be configured by a discontinuous surface other than the curved surface.

For example, the central portion of the convex region may be formed into a spherical shape while the peripheral portion may be formed into an aspherical curved surface shape. In this case, a section which changes from a spherical shape to an aspherical curved surface shape constitutes the boundary between the central portion and the peripheral portion. The boundary between the central portion and the peripheral portion may be provided in a portion with 1/3 to 2/3 of the radius in plan view. Needless to say, the entire convex region may have an aspherical curved surface shape.

Needless to say, each of the second annular regions which is a defocus region may be a region in which one cross-section of the lens is sawtooth-shaped or uneven (phase diffraction structure). This unevenness may have a periodic structure or may have a non-periodic structure such as surface roughness formed by embossing.

It is preferred that the protruding height (protruding amount from the first annular region) of each second annular region be approximately 0.1 to 10 $\mu$m, or approximately 0.4 to 2.0 $\mu$m.

In plan view, the ratio of the second annular region group to the area of the surface on which the second annular region group is formed may be 20 to 60%.

Although the specific numerical value of the defocus power in each second annular region is not limited, the minimum value of the defocus power provided by the defocus regions on the spectacle lens, for example, is preferably in the range of 0.50 to 4.50 D, and the maximum value thereof is preferably in the range of 3.00 to 10.00 D. The difference between the maximum value and the minimum value is preferably in the range of 1.00 to 5.00 D.

The term "defocus power" refers to the difference between the power of each second annular region which is a defocus region and the power of a portion other than each second annular region (clear region). In other words, the term "defocus power" refers to the difference obtained by subtracting the power of a base portion from the average of the minimum power and the maximum power at a predetermined section in the defocus region.

In the present specification, the term "power" refers to the average power, which is the average of the power in the direction in which the power becomes minimum and the power in the direction (direction perpendicular to the foregoing direction) in which the power becomes maximum.

The spectacle lens according to an aspect of the present invention is as with PTL 4. That is, the spectacle lens according to an aspect of the present invention is provided with a plurality of second annular regions, each annular region being formed by the second refractive region when the spectacle lens is viewed in plan view, and having a rotationally symmetrical shape with respect to the center of the ring. The plurality of second annular regions are referred to as a second annular region group.

Also provided are a plurality of first annular regions sandwiched between the respective second annular regions and constituted by the first refractive regions. The plurality of first annular regions are referred to as a first annular region group.

The first annular regions and the second annular regions are alternately arranged adjacent to each other toward the outside from the eye point.

One of the features of an aspect of the present invention is that the second annular regions are arranged densely on the nose side from the eye point toward the outside and the second annular regions are arranged sparsely on the ear side from the eye point toward the outside.

In near vision, the line of sight passes through the nose side of the spectacle lens. In one embodiment of the present invention, on the nose side of the spectacle lens, the second annular regions are arranged densely so that the second annular regions can sufficiently exhibit the refractive power.

According to this configuration, in an aspect of the present invention, it is possible to inhibit a decrease in the refractive power of the second annular region in the near view, while making the second annular region a rotationally symmetrical shape.

Incidentally, in the case where the above-described configuration is employed, each of the second annular regions has a rotationally symmetrical shape in plan view and in a cross-sectional view passing through the center of the ring. In addition, each of the first **annular** regions has a rotationally symmetrical shape at least in plan view. If each of the first annular regions has a rotationally symmetrical shape in a cross-sectional view passing through the center of the ring, the first refractive region serving as the base portion of the spectacle lens can also be machined by a lathe, which further facilitates the manufacture.

The respective second annular regions and the respective first annular regions are rotationally symmetrical in plan view, and by arranging the second annular regions densely on the nose side, naturally the second annular regions are arranged sparsely on the ear side. This configuration can exhibit other effects in addition to the effects of the present invention.

For example, in distance vision and peripheral vision, in the case of the lens for the left eye, the line of sight passes through the regions where y > 0 and x > 0 are satisfied. Since the second annular regions are arranged densely on the nose side, the second annular regions are dense in a region where x < 0 is satisfied and, instead, the second annular regions are sparse in a region where x > 0 is satisfied.

The fact that the second annular regions are sparse means that the area occupied by the first annular regions (the first refractive regions having the prescription power) is larger on the ear side than on the nose side. That is, in distance vision and peripheral vision, the spectacle lens is brought close to the state of wearing a normal spectacle lens.

In other words, in an aspect of the present invention, the second annular regions are arranged densely on the nose side from the eye point toward the outside by altering the position of the center of rotational symmetry between a second annular region closer to the eye point and a second annular region farther away from the eye point.

<Specific examples or preferred examples of spectacle lens according to aspect of the present invention>

There is no limitation on the size and shape of the center-side clear region. One benchmark for the lower limit of the size of the center-side clear region may be a size which can contain a circle with a diameter of 5.00 mm around an eye point EP. One benchmark for the upper limit of the size of the center-side clear region may suffice to fit within a circle with a diameter of 10.00 mm around the eye point EP. The area of the center-side clear region may be 80 mm$^2$ or less. The shape of the center-side clear region may be rotationally symmetrical in plan view, such as a circular shape.

Hereinafter, preferred examples relating to near-vision will be described.

Preferably, in the second annular region group, the position of the center of the second annular region close to the eye point is displaced toward the nose side relative to the position of the center of the second annular region far from the eye point. According to this configuration, when the line of sight passes through during near vision, the object can be viewed more reliably through the center-side clear region which is a portion close to the eye point.

The position of the center of each second annular region constituting the second annular region group may be monotonously displaced toward the nose side from the position of the center of the second annular region farthest from the eye point toward the position of the center of the second annular region closest to the eye point.

Such expression as "monotonously displaced toward the nose side" means that, for example, when the position of the center of an arbitrary second annular region is compared with the position of the center of a second annular region on the inner side closest thereto, the positions of the centers are the same or said position of the center of the second annular region on the inner side is displaced toward the nose side (specifically, in one direction on the nose side). Alternatively, the fact that the positions of the centers are the same may be excluded.

Although the examples described in this paragraph are favorable, a provision may also be used that 60% or more of the number of all the second annular regions and/or 60% or more of the total area of all the second annular regions is monotonously displaced to the nose side. Preferably, a numerical value such as 70%, 80% or 90% is adopted instead of 60%.

Also, the amount of displacement (displacement toward the nose side) from the position of the center of an arbitrary second annular region to the position of the center of the second annular region on the inner inside closest thereto may be equal or increased (i.e., monotonously increased) toward the inner side. Alternatively, the fact that the amounts of displacement toward the nose side are equal may be excluded.

Although the example described in this paragraph is favorable, a provision may be used that 60% or more of the number of all the second annular regions and/or 60% or more of the total area of all the second annular regions satisfies the monotonous increase described in this paragraph. Preferably, a numerical value such as 70%, 80% or 90% is adopted instead of 60%.

As a result of the configuration described in the above paragraph, the center of the second annular region closest to the eye point may be closer to the nose than the eye point.

A requirement that the width of each first annular region on the nose side be monotonously reduced toward the outside may be satisfied. For example, when comparing the width of any first annular region on the nose side with the width of the first annular region on the nose side that is immediately outside said any first annular region, if both widths are equal or the farther the first annular region is, the width of the first annular region on the nose side on the outside may be reduced. Alternatively, the fact that both widths are equal to each other may be excluded.

Although the example described in this paragraph is favorable, a provision may be used that 60% or more of the number of all the first annular regions and/or 60% or more of the total area of all the first annular regions satisfies the monotonous decrease described in this paragraph. Preferably, a numerical value such as 70%, 80% or 90% is adopted instead of 60%.

Hereinafter, preferred examples relating to distance vision and/or peripheral vision will be listed.

The width on the ear side is greater than the width on the nose side in the first annular region farthest from the eye point, and

the value of {(width on the ear side) - (width on the nose side)} may be constant or increased from the eye point toward the outside (i.e., may be monotonously increased) in each of the first annular regions. Alternatively, the fact that the value may be constant may be excluded.

Although the example described in this paragraph is favorable, a provision may be used that 60% or more of the number of all the first annular regions and/or 60% or more of the total area of all the first annular regions satisfies the monotonous increase described in this paragraph. Preferably, a numerical value such as 70%, 80% or 90% is adopted instead of 60%.

According to this configuration, the farther away from the eye point toward the ear, the larger the width of the first annular region corresponding to the clear region becomes. Generally, for the wearer, as the position in the spectacle lens through which the line of sight passes moves away from the eye point to the ear side, the state of distant vision and/or peripheral vision away from the front view toward the ear side is obtained. As a result, the stronger the state of distant vision and/or peripheral vision away from the front view toward the ear side, the easier it is for the line of sight to pass through the clear region. As a result, distant vision and/or peripheral vision can become comfortable. In particular, blurriness of an object occurring at the time of confirming the presence (illumination) of a traffic signal or another vehicle in the direction on the ear side while driving a vehicle can be inhibited, and the safety can be confirmed favorably.

Along with or instead of the {(width on the ear side) - (width on the nose side)} described above, the requirement that the width of each of the first annular regions on the ear side is monotonously increased toward the outside may be satisfied. For example, when comparing the width of any first annular region on the ear side with the width of the first annular region on the ear side that is immediately outside said any first annular region, if both widths are equal or the farther the first annular region is, the width of the first annular region on the outside on the ear side may be increased.

As an example, the width on the ear side may be greater than the width on the nose side in a first annular region in the middle between the first annular region farthest from the eye point and the first annular region closest thereto (one when the number of the first annular regions is an odd number and two when the number is an even number).

The center of the second annular region farthest from the eye point may be equal to the position of the eye point. With this construction, a sense of discomfort caused by the difference in the center of each second annular region is alleviated, and the spectacle lens is improved in appearance. By setting the center of the second annular region farthest from the eye point as the position of the eye point, the eye point can be easily grasped when performing lens shape processing or fitting the spectacle lens to the wearer.

The manner of arrangement of the second annular region group (and thus the first annular region group, the center-side clear region, and the outer-side clear region) is not particularly limited, and can be determined from such viewpoints as visibility from the outside of the second annular region group, design property imparted by the second annular region group, and refractive power by the second annular region group.

The number of the second annular regions (and thus the first annular regions) is not particularly limited, and may be a number that can bring about the myopia progression inhibition effect (or the hyperopia reducing effect).

The sizes of the second annular regions and the first annular regions are not limited to the above-described preferred examples, and may be sizes that can bring about the myopia progression inhibition effect (or the hyperopia reducing effect).

On the other hand, when ease of processing is taken into consideration, the widths of the respective second annular regions may be equal in all directions as viewed in plan view, and the widths of all the second annular regions may be equal.

With respect to the first annular region group, for example, the diameter of the outer side of each of the first annular regions may increase in an arithmetic sequence manner from the inner side to the outer side.

The width of the ring in each of the first annular regions (clear regions) may be larger than the width of the ring in each of the adjacent second annular regions. Therefore, a good visual field can be ensured.

An example of the specific range of values of each configuration is as follows.

Width of the ring of the first annular region: 0.5 to 1.5 mm
Width of the ring of the second annular region: 0.5 to 1.5 mm
Ratio of the width of the ring of the second annular region to the width of the ring of the first annular region: 1:2 to 2:1

The details of an example of the range of widths of the first annular region on the ear side are as follows.

The corneal vertex distance is assumed to be 12 mm, and the forward tilt angle is assumed to be 0°. The parameters are set as follows. The term "i" is a natural number, which indicates the order of the first annular regions from the side closer to the eye point (inner side).

The i-th first annular region from the inner side is the region sandwiched by the i-th and i+1-th second annular regions from the inner side. The number of the second annular regions is assumed to be k + 1, and the maximum value of i, that is, the number of the first annular regions, is assumed to be k. The definition of each reference sign is as follows.

L [unit: mm]: Distance from the pupil to the subject to be viewed (set to 200 mm or less)
D_i [unit: mm]: Distance from the pupil to the position of the center of the i-th first annular region from the side closer to the eye point (inner side) (The center-side clear region is treated as the 0th region.)
W_i [unit: mm]: Width of the i-th first annular region on the nose side from the side close to the eye point (inner side) (The center-side clear region is treated as the 0th.)

The apparent width W' (the width after extension, also illustrated in Figs. 1A and 1B as described above) of the first annular region when viewed in near view is obtained by the following expression.

$$W'\_i = W\_i \times L/(L - D\_i)$$

The optimum configuration is that the aforementioned "apparent width" is equal in most of the first annular regions, but effectively, the aforementioned "apparent width" is preferably equal in the 1st first annular region close to the eye point and in the k-th first annular region that is the outermost region, where the difference in "apparent width" is most likely to occur. In view of this, it is preferred that the following expression be satisfied.

$$W\_1 \times L/(L - D\_1) = W\_k \times L/(L - D\_k)$$

After rewriting this expression, an expression indicating a preferable condition of the width of the first annular region is obtained as follows.

$$W\_k/W\_1 = (L - D\_k) / (L - D\_1)$$

That is, it is preferred that the left side and the right side of the above expression are equal.

Even if the "apparent widths" are not completely equal as described above, a sufficient effect can be obtained if the difference in the "apparent widths" can be reduced to half as follows. When the first annular regions are arranged so as to have a uniform width as described in PTL 4, the apparent width of the regions differs by the following distance.

$$W'\_k/W'\_1 = (L - D\_1)/(L - D\_k)$$

When the value is a value corresponding to the square root of the right side, it can be considered that the difference in apparent region width is reduced to half or less. In view of this, it is preferred that the following expression be satisfied.

$$((L-D\_1)/(L-D\_k))^{-1/2} < W'\_k/W'\_1 < ((L-D\_1)/(L-D\_k))^{1/2}$$

The lower limit value of the above expression takes into account an allowance for excessive correction of the original difference. More specifically, when excessive correction is made such that $W\_k/W\_1$ is less than 1, it is sufficient that $W'\_1/W'\_k$ is smaller than the value corresponding to the square root described above.

The following conditional expression is obtained by applying the above expression to the above preferable condition.

$$((L-D\_k)/(L-D\_1))^{3/2} < W\_k/W\_1 < ((L-D\_k)/(L-D\_1))^{1/2}$$

The second annular region farthest from the eye point is arranged outside the first annular region farthest from the eye point, and

an outer-side clear region, which is the first refractive region, may be arranged on the outer side of the second annular region farthest from the eye point. As with the center-side clear region, the outer-side clear region is a region in which the second annular region (defocus region) is not formed.

<Other specific examples of spectacle lens>

A lens substrate is made of, for example, a thermosetting resin material such as thiourethane, allyl, acryl, or epithio. Note that any other resin material with which a desired refractivity can be obtained may be selected as a resin material that constitutes the lens substrate. Also, a lens substrate that is made of inorganic glass, rather than a resin material, may alternatively be employed.

A hard coat film is formed using a thermoplastic resin or a UV-curable resin, for example. The hard coat film can be formed using a method of immersing the lens substrate in a hard coating agent, spin coating, or the like. Due to being coated with such hard coat film, the durability of the spectacle lens can be improved.

An anti-reflection film is formed by forming films of an anti-reflection agent such as $ZrO_2$, $MgF_2$, or $Al_2O_3$ by means of vacuum evaporation, for example. Due to being coated with such anti-reflection film, the visibility of an image viewed through the spectacle lens can be improved.

As mentioned above, a plurality of defocus regions are formed on the object-side surface of the lens substrate. Accordingly, if this surface is coated with the hard coat film and the anti-reflection film, a plurality of defocus regions are also formed with the hard coat film and the anti-reflection film, following the defocus regions on the lens substrate.

To produce the spectacle lens, first, the lens substrate is molded using a known molding method, such as injection molding. For example, by performing molding by means of injection molding using a mold that has molding surfaces provided with a plurality of concave portions, a lens substrate is obtained that has the defocus regions on at least one of the surfaces.

After the lens substrate has been obtained, next, the hard coat film is formed on the surfaces of the lens substrate. The hard coat film can be formed using a method of immersing the lens substrate in a hard coating agent, spin coating, or the like.

After the hard coat film has been formed, the anti-reflection film is then formed on a surface of the hard coat film. The anti-reflection film can be formed by depositing an ingredient for said film by means of vacuum evaporation.

With the production method with the above procedure, the spectacle lens is obtained that has, on the object-side surface, a plurality of defocus regions that protrude toward the object.

The film thickness of a coating film formed through the foregoing steps may be, for example, in the range of 0.1 to 100 $\mu$m (preferably in the range of 0.5 to 5.0 $\mu$m, and more preferably in the range of 1.0 to 3.0 $\mu$m). However, the film thickness of the coating film is determined depending on the functions required for the coating film, and is not limited to the above-described exemplary range.

One or more additional coating films can also be formed on the coating film. Examples of such coating film include various coating films such as an anti-reflection film, a water repellent or hydrophilic anti-fouling film, and an anti-fogging film. A known technique can be applied as a method for forming these coating films.

<Spectacles>

The technical idea of the present invention is also reflected in spectacles in which the vicinity of the peripheral edge of the spectacle lens is cut on the basis of a specified frame shape and the spectacle lens is mounted in the spectacle frame. The type, shape, and the like of the spectacle frame are not limited, and the frame may be of a full rim, half rim, under rim, or rimless type.

Although the spectacle lens described above is assumed to be an uncut lens obtained prior to lens shape processing, the technical concept of the present invention is also applicable to a lens obtained after the lens shape processing as described in the above paragraphs. However, at least a part of the outermost (or further inside) second annular region can be cut by the lens shape processing. In this case, the outermost second annular region in the lens obtained after the lens shape processing indicates the second annular region that has not been cut at all. In the lens obtained after the lens shape processing, the outer-side clear region is defined as a region that is located between the second annular region that has not been cut at all and the peripheral edge of the spectacle lens, and is other than the second annular region, a part of which has been cut.

<Others>

The technical scope of the present invention is not limited to the aspects described above, and also includes modes that have undergone various modifications and improvements in a range that allows the specific effects obtained by the constituent elements of the invention and combinations thereof to be derived.

To realize a spectacle lens according to an aspect of the present invention, the technical concept of the present invention is reflected in a method of designing a spectacle lens in which a second annular region described above is arranged on at least one of the object-side surface and the eyeball-side surface. The technical concept of the present invention is also reflected in a method for manufacturing a spectacle lens, in which a lens substrate is processed so as to realize a surface designed by this design method.

Examples

The present invention will be specifically described below using examples, but the present invention is not limited to the following examples in any way.

<Comparative Example 1>

The following spectacle lens for the left eye was prepared. Note that the spectacle lens is configured only by a lens substrate, and no other material was laminated on the lens substrate. A prescription power S (spherical power) was set to 0.00 D, and C (cylindrical power) was set to 0.00 D. In the spectacle lens, which is an uncut lens, the eye point is aligned with the geometric center. The coordinates of the tables described below are the coordinates obtained when the eye point is placed at the origin.

- Diameter of lens substrate in plan view: 60.00 mm
- Type of lens substrate: PC (polycarbonate)
- Refractive index of lens substrate: 1.589
- Surface on which second annular region is formed: Object-side surface
- Shape of second annular region in plan view: Circular ring
- Cross-sectional shape of second annular region: Spherical
- Defocus power of second annular region: 3.50 D
- Range of center-side clear region: Region of circle with 3.00-mm radius from eye point EP

An outer-side clear region is provided on the outer side of the outermost second annular region.

In the following tables, the second annular regions are numbered in which the number closest to the eye point is designated as 1 and the number on the outside thereof is designated as 2, and the coordinates of the second annular regions and the intervals (distances) (unit: mm) of the respective numbers are summarized in the following tables.

[Table 1]

| NUMBERS OF SECOND ANNULAR REGIONS (FROM THE INNER SIDE) | 1 | 2 | 3 | 4 | 5 | 6 | 7 | 8 | 9 | 10 | 11 |
|---|---|---|---|---|---|---|---|---|---|---|---|
| CENTER x COORDINATES | 0.00 | 0.00 | 0.00 | 0.00 | 0.00 | 0.00 | 0.00 | 0.00 | 0.00 | 0.00 | 0.00 |
| EAR SIDE REGION INNER END x COORDINATES | 3.00 | 5.00 | 7.00 | 9.00 | 11.00 | 13.00 | 15.00 | 17.00 | 19.00 | 21.00 | 23.00 |
| REGION OUTER END x COORDINATES | 4.00 | 6.00 | 8.00 | 10.00 | 12.00 | 14.00 | 16.00 | 18.00 | 20.00 | 22.00 | 24.00 |
| INTERVAL WITH REGION ONE LEVEL INWARD | | 1.00 | 1.00 | 1.00 | 1.00 | 1.00 | 1.00 | 1.00 | 1.00 | 1.00 | 1.00 |
| APPARENT REGION INTERVAL (200 mm IN NEAR VISION) | | 1.07 | 1.07 | 1.08 | 1.09 | 1.09 | 1.10 | 1.11 | 1.12 | 1.13 | 1.15 |
| NOSE SIDE REGION INNER END x COORDINATES | -3.00 | -5.00 | -7.00 | -9.00 | -11.00 | -13.00 | -15.00 | -17.00 | -19.00 | -21.00 | -23.00 |
| REGION OUTER END x COORDINATES | -4.00 | -6.00 | -8.00 | -10.00 | -12.00 | -14.00 | -16.00 | -18.00 | -20.00 | -22.00 | -24.00 |
| INTERVAL WITH REGION ONE LEVEL INWARD | | 1.00 | 1.00 | 1.00 | 1.00 | 1.00 | 1.00 | 1.00 | 1.00 | 1.00 | 1.00 |
| APPARENT REGION INTERVAL (200 mm IN NEAR VISION) | | 1.07 | 1.07 | 1.08 | 1.09 | 1.09 | 1.10 | 1.11 | 1.12 | 1.13 | 1.15 |

Fig. 3 is a schematic view of a cross-sectional shape of a spectacle lens according to Comparative Example 1 when a plane including an x-axis is taken as a cross-section, and more specifically a schematic view obtained by subtracting a spherical component of a base curve from the cross-sectional shape of the lens, the schematic view being a graph in which the vertical axis represents a z-coordinate value (unit: $\mu$m), and the horizontal axis represents an x-coordinate value (unit: mm).

<Example 1>

A spectacle lens with contents of the following table was prepared. Everything else was the same as Comparative Example 1.

[Table 2]

| NUMBERS OF SECOND ANNULAR REGIONS (FROM THE INNER SIDE) | | 1 | 2 | 3 | 4 | 5 | 6 | 7 | 8 | 9 | 10 | 11 |
|---|---|---|---|---|---|---|---|---|---|---|---|---|
| EAR SIDE | CENTER X COORDINATES | -0.95 | -0.89 | -0.83 | -0.75 | -0.67 | -0.58 | -0.48 | -0.37 | -0.26 | -0.13 | 0.00 |
| | REGION INNER END x COORDINATES | 2.05 | 4.11 | 6.17 | 8.25 | 10.33 | 12.42 | 14.52 | 16.63 | 18.74 | 20.87 | 23.00 |
| | REGION OUTER END x COORDINATES | 3.05 | 5.11 | 7.17 | 9.25 | 11.33 | 13.42 | 15.52 | 17.63 | 19.74 | 21.87 | 24.00 |
| | INTERVAL WITH REGION ONE LEVEL INWARD | | 1.06 | 1.07 | 1.07 | 1.08 | 1.09 | 1.10 | 1.11 | 1.12 | 1.12 | 1.13 |
| | APPARENT REGION INTERVAL (200 mm IN NEAR VISION) | | 1.13 | 1.14 | 1.16 | 1.17 | 1.19 | 1.21 | 1.23 | 1.25 | 1.27 | 1.30 |
| NOSE SIDE | REGION INNER END x COORDINATES | -3.95 | -5.89 | -7.83 | -9.75 | -11.67 | -13.58 | -15.48 | -17.37 | -19.26 | -21.13 | -23.00 |
| | REGION OUTER END x COORDINATES | -4.95 | -6.89 | -8.83 | -10.75 | -12.67 | -14.58 | -16.48 | -18.37 | -20.26 | -22.13 | -24.00 |
| | INTERVAL WITH REGION ONE LEVEL INWARD | | 0.94 | 0.93 | 0.93 | 0.92 | 0.91 | 0.90 | 0.89 | 0.88 | 0.88 | 0.87 |
| | APPARENT REGION INTERVAL (200 mm IN NEAR VISION) | | 1.01 | 1.00 | 1.00 | 1.00 | 1.00 | 1.00 | 1.00 | 1.00 | 1.00 | 1.00 |

Fig. 4 is a schematic view of a cross-sectional shape of a spectacle lens according to Example 1 when a plane including an x-axis is taken as a cross-section, and more specifically a schematic view obtained by subtracting a spherical component of a base curve from the cross-sectional shape of the lens, the schematic view being a graph in which the vertical axis represents a z-coordinate value (unit: $\mu$m), and the horizontal axis represents an x-coordinate value (unit: mm).

In Example 1, as compared to Comparative Example 1, the second annular regions were able to be arranged densely so that the second annular region could sufficiently exhibit the refractive power on the nose side of the spectacle lens through which the line of sight passes in near vision. Specifically, the apparent interval of the second annular regions was able to be made constant on the nose side (-x direction). Consequently, compared to Comparative Example 1, in Example 1, it is possible to inhibit a decrease in the refractive power of the second annular region in near vision, while the second annular region has a rotationally symmetrical shape.

<Example 2>

A shape obtained by displacing a sag value (z-coordinate value) of the second annular region group in Example 1 by 0.25 $\mu$m in -z-direction is employed. In other words, the root of each of the second annular regions is partially dented to the clear region by 0.25 $\mu$m.

Fig. 5 is a schematic view of a cross-sectional shape of a spectacle lens according to Example 2 when a plane including an x-axis is taken as a cross-section, and more specifically a schematic view obtained by subtracting a spherical component of a base curve from the cross-sectional shape of the lens, the schematic view being a graph in which the vertical axis represents a z-coordinate value (unit: $\mu$m), and the horizontal axis represents an x-coordinate value (unit: mm).

In Example 2, a step is formed at the boundary between each second annular region and the clear region, and the plane becomes discontinuous. As a result, the contrast at the low spatial frequency tends to be lowered more easily. Instead, since the segment height relative to the base is lowered, the contrast at the high spatial frequency is less likely to be lowered.

Reference Signs List

1      Spectacle lens
2      Center-side clear region
3a    First annular region group
3b    Second annular region group
4      Outer-side clear region
EP   Eye point
C      Center of second annular region

**Claims**

1. A spectacle lens achieving a myopia progression inhibition effect or a hyperopia reducing effect, the spectacle lens comprising, on at least either one of an object-side surface and an eyeball-side surface:

   a first refractive region that has a first power for realizing a prescription power of a wearer; and
   a second refractive region that has a second power different from the first power,
   and the spectacle lens further comprising: a second annular region group that includes a plurality of second annular regions configured by the second refractive region when the spectacle lens is viewed in plan view, the second annular regions being rotationally symmetrical with respect to a center of a ring; and
   a first annular region group that includes a plurality of first annular regions sandwiched between the second annular regions and configured by the first refractive region,
   wherein the first annular regions and the second annular regions are alternately arranged adjacent to each other from an eye point toward the outside,
   an inner side of the second annular region closest to the eye point is a center-side clear region which is the first refractive region, and the eye point is arranged in the center-side clear region,
   the second annular regions are densely arranged on a nose side from the eye point to the outside, and
   the second annular regions are sparsely arranged on an ear side from the eye point to the outside.

2. The spectacle lens according to claim 1, wherein, in the second annular region group, a center position of a second annular region close to the eye point is displaced toward the nose side with respect to a center position of a second annular region far from the eye point.

3. The spectacle lens according to claim 1 or 2, wherein a center of the second annular region closest to the eye point is located on the nose side of the eye point.

4. The spectacle lens according to claim 1 or 2, wherein a width on the ear side is greater than a width on the nose side in a first annular region farthest from the eye point, and
a value of {(width on the ear side) - (width on the nose side)} increases monotonously outward from the eye point in each of the first annular regions.

5. The spectacle lens according to claim 1 or 2, wherein a center of the second annular region farthest from the eye point is equal to the position of the eye point.

6. The spectacle lens according to claim 1 or 2, wherein widths of the respective second annular regions are equal in all directions in plan view, and widths of all the second annular regions are equal.

7. The spectacle lens according to claim 1 or 2, wherein a width of the ring of each of the first annular regions is greater than a width of the ring of each adjacent second annular region.

8. The spectacle lens according to claim 1 or 2, wherein the second annular region farthest from the eye point is arranged outside the first annular region farthest from the eye point, and
an outer-side clear region which is the first refractive region is arranged on the outside of the second annular region farthest from the eye point.

9. The spectacle lens according to claim 1 or 2, the spectacle lens achieving a myopia progression inhibition effect, wherein the second refractive region is a projecting portion viewed from the first refractive region.

10. The spectacle lens according to claim 1 or 2, the spectacle lens achieving a myopia progression inhibition effect,

wherein, in the second annular region group, the center position of the second annular region close to the eye point is displaced toward the nose side with respect to the center position of the second annular region far from the eye point,
a center of the second annular region closest to the eye point is located on the nose side of the eye point,
a width on the ear side is greater than a width on the nose side in a first annular region farthest from the eye point, and
a value of {(width on the ear side) - (width on the nose side)} increases monotonously outward from the eye point in each of the first annular regions,
a center of the second annular region farthest from the eye point is equal to the position of the eye point,
the widths of the respective second annular regions are equal in all directions in plan view, and the widths of all the second annular regions are equal,
the width of the ring of each of the first annular regions is greater than the width of the ring of each adjacent second annular region,
the second annular region farthest from the eye point is arranged outside the first annular region farthest from the eye point,
an outer-side clear region which is the first refractive region is arranged on the outside of the second annular region farthest from the eye point, and
the second refractive region is a projecting portion viewed from the first refractive region.

11. Spectacles, comprising: the spectacle lens according to claim 1 or 2, and a spectacle frame.

[Fig. 1A]

[Fig. 1B]

[Fig. 2]

[Fig. 3]

[Fig. 4]

[Fig. 5]

## INTERNATIONAL SEARCH REPORT

| International application No. |
| --- |
| **PCT/JP2024/028365** |

| | |
| --- | --- |
| **A.** | **CLASSIFICATION OF SUBJECT MATTER** |

*G02C 7/06*(2006.01)i
FI: G02C7/06

According to International Patent Classification (IPC) or to both national classification and IPC

| | |
| --- | --- |
| **B.** | **FIELDS SEARCHED** |

Minimum documentation searched (classification system followed by classification symbols)

G02C7/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | WO 2023/007028 A1 (ESSILOR INTERNATIONAL) 02 February 2023 (2023-02-02) paragraphs [0115]-[0128], [0145]-[0148], [0174], [0225], [0245], fig. 1-2, 5, 8 | 1-11 |
| A | JP 2023-531255 A (BRIEN HOLDEN VISION INSTITUTE LIMITED) 21 July 2023 (2023-07-21) entire text, all drawings | 1-11 |
| A | JP 2023-517946 A (BRIEN HOLDEN VISION INSTITUTE LIMITED) 27 April 2023 (2023-04-27) entire text, all drawings | 1-11 |
| A | JP 2021-531496 A (SIGHTGLASS VISION, INC.) 18 November 2021 (2021-11-18) entire text, all drawings | 1-11 |
| A | JP 2021-524051 A (ESSILOR INTERNATIONAL) 09 September 2021 (2021-09-09) entire text, all drawings | 1-11 |

☑ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 September 2024** | **17 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/028365** |

| C. | DOCUMENTS CONSIDERED TO BE RELEVANT | |
|---|---|---|
| Category* | Citation of document, with indication, where appropriate, of the relevant passages | Relevant to claim No. |
| A | US 2012/0062836 A1 (TSE, Yan Yin) 15 March 2012 (2012-03-15)<br>entire text, all drawings | 1-11 |

Form PCT/ISA/210 (second sheet) (July 2022)

## INTERNATIONAL SEARCH REPORT
### Information on patent family members

International application No.

**PCT/JP2024/028365**

| Patent document cited in search report | | | Publication date (day/month/year) | Patent family member(s) | | | Publication date (day/month/year) |
|---|---|---|---|---|---|---|---|
| WO | 2023/007028 | A1 | 02 February 2023 | EP | 4124903 | A1 | |
| | | | | CN | 117730273 | A | |
| | | | | JP | 2024-527108 | A | |
| JP | 2023-531255 | A | 21 July 2023 | US | 2023/0258958 | A1 | |
| | | | | entire text, all drawings | | | |
| | | | | WO | 2021/260642 | A1 | |
| | | | | KR | 10-2023-0028440 | A | |
| | | | | CN | 115867851 | A | |
| | | | | CA | 3188148 | A1 | |
| JP | 2023-517946 | A | 27 April 2023 | US | 2021/0282966 | A1 | |
| | | | | entire text, all drawings | | | |
| | | | | US | 2022/0218520 | A1 | |
| | | | | US | 2023/0134059 | A1 | |
| | | | | US | 2024/0139026 | A1 | |
| | | | | WO | 2021/181304 | A1 | |
| | | | | KR | 10-2022-0148910 | A | |
| | | | | CN | 115485609 | A | |
| | | | | TW | 202200093 | A | |
| | | | | CA | 3175124 | A1 | |
| JP | 2021-531496 | A | 18 November 2021 | US | 2022/0035179 | A1 | |
| | | | | entire text, all drawings | | | |
| | | | | GB | 2592488 | A | |
| | | | | WO | 2020/014613 | A1 | |
| | | | | EP | 3821291 | A1 | |
| | | | | CN | 112534340 | A | |
| | | | | TW | 202015633 | A | |
| | | | | KR | 10-2021-0066789 | A | |
| | | | | AU | 2019302757 | A1 | |
| | | | | AU | 2022221518 | A1 | |
| | | | | CA | 3106356 | A1 | |
| | | | | CA | 3200410 | A1 | |
| JP | 2021-524051 | A | 09 September 2021 | US | 2021/048689 | A1 | |
| | | | | entire text, all drawings | | | |
| | | | | WO | 2019/166657 | A1 | |
| | | | | CN | 111095082 | A | |
| | | | | KR | 10-2020-0124234 | A | |
| | | | | TW | 202001353 | A | |
| | | | | CA | 3092418 | A1 | |
| US | 2012/0062836 | A1 | 15 March 2012 | US | 2015/0109574 | A1 | |
| | | | | TW | 201211618 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170131567 A
- WO 2021249846 A
- WO 2020045567 A
- JP 2008514318 A
- CN 111103701 A